# FASCICULE DE BREVET EUROPEEN

(11) **EP 4 078 719 B1**
(45) Date de publication et mention de la délivrance du brevet: **07.02.2024**
(21) Numéro de dépôt: 20823815.4
(22) Date de dépôt: 14.12.2020
(51) Int. Cl.: H01M 10/613, H01M 10/625, H01M 10/6567, A62C 3/16

(54) **BOÎTIER POUR SYSTÈME DE REFROIDISSEMENT POUR UNE BATTERIE**
GEHÄUSE FÜR EIN KÜHLSYSTEM FÜR EINE BATTERIE
HOUSING FOR A COOLING SYSTEM FOR A BATTERY

(30) Priorité: 18.12.2019 FR 1914781
(43) Date de publication de la demande: 26.10.2022
(73) Titulaire: Renault s.a.s, 92100 Boulogne Billancourt (FR)
(72) Inventeur: DEBART, Aurelie, 80260 Pierregot (FR); LERAY, David, 91190 gif sur yvette (FR); TOURRET, Thierry, 78950 Gambais (FR)
(86) Numéro de dépôt international: PCT/EP2020/085929
(87) Numéro de publication internationale: WO 2021/122430

(56) Documents cités:
- DE-A1-102016 200 368
- FR-A1- 2 986 911
- US-A1- 2010 136 391

## Description

L'invention concerne un boîtier pour système de refroidissement pour une batterie. L'invention porte aussi sur un système de refroidissement pour une batterie comprenant un tel boîtier. L'invention porte encore sur un pack batterie comprenant un tel système de refroidissement. L'invention porte également sur un véhicule automobile comprenant un tel pack batterie.

Certains véhicules automobiles, notamment les véhicules à motorisation électrique ou hybride, comprennent une batterie d'alimentation de puissance pour alimenter en énergie électrique le moteur électrique, notamment d'entraînement.

Une batterie d'alimentation de puissance d'un véhicule à motorisation électrique ou hybride est par exemple de type Lithium-ion (Li-ion). Une telle batterie comprend des cellules électrochimiques comprenant un électrolyte. Une telle batterie comprend généralement plusieurs modules batterie ou ensembles de cellules électrochimiques. La batterie est entourée par un boîtier.

Dans le cas d'un disfonctionnement d'une cellule électrochimique dans un pack batterie, un phénomène d'emballement thermique peut se produire, pouvant éventuellement entrainer un incendie du véhicule en l'absence de dispositif de sécurité comme ceux mis en oeuvre par la demanderesse.

Pour éteindre un feu d'une telle batterie, une solution consiste à « noyer » la batterie en injectant un fluide d'extinction, notamment de l'eau, à l'intérieur du boîtier de la batterie.

On connaît du document FR2986910 un dispositif de refroidissement d'un pack batterie par circulation d'un fluide de refroidissement dans des conduits du pack batterie. Un tel dispositif permet une circulation forcée du fluide de refroidissement dans les conduits grâce à une pompe. Dans un tel dispositif, il n'y a pas de contact direct entre le fluide de refroidissement et les cellules du pack batterie. En fonctionnement normal, une régulation de la pompe permet d'évacuer la chaleur vers l'extérieur du pack batterie. Dans le cas d'un emballement thermique, c'est-à-dire lorsque la température d'une cellule dépasse une température limite ou que le compartiment contenant la cellule dépasse une pression limite, un tel dispositif permet d'introduire un fluide de refroidissement dans la batterie pour arrêter l'emballement thermique par noyage. La tuyauterie de refroidissement d'un tel dispositif étant munie de pièces creuses en matériau fusible (et à faible résistance à la pression), ces pièces vont fondre (ou éclater) et le fluide de refroidissement pourra se déverser sur la cellule en surchauffe.

Un dispositif similiaire est divulgué dans le document US2010136391 A1.

Toutefois, cette solution présente des inconvénients. En particulier, un tel dispositif ne permet pas un refroidissement assez efficace en mode nominal de fonctionnement, compte-tenu notamment des fortes contraintes thermiques de la charge rapide.

Le but de l'invention est de fournir un boîtier pour système de refroidissement pour une batterie remédiant aux inconvénients ci-dessus et améliorant les dispositifs connus de l'art antérieur. En particulier, l'invention permet de réaliser un boîtier pour système de refroidissement pour une batterie permettant d'obtenir un refroidissement par aspersion plus efficace en fonctionnement nominal de la batterie, tout en permettant de noyer une ou plusieurs cellules en cas d'emballement thermique.

Selon l'invention, un boîtier pour système de refroidissement pour une batterie, délimitant un logement pour des modules batterie, comprend :
- un carter inférieur comprenant une ouverture d'entrée pour un fluide de refroidissement ;
- un carter supérieur comprenant une ouverture de sortie pour le fluide de refroidissement ;
- un conduit de circulation pour le fluide de refroidissement qui communique avec l'ouverture d'entrée et l'ouverture de sortie,

le carter supérieur comprenant une pluralité de trous qui débouchent dans ledit logement,
au moins une buse thermofusible étant disposée à l'emplacement de chaque trou, chaque buse comprenant une ouverture permettant le passage du fluide de refroidissement, et chaque buse thermofusible étant apte à fondre lorsque la température devient supérieure à un seuil.

Les buses thermofusibles peuvent comprendre un polymère, notamment en élastomère thermofusible, par exemple en polytétrafluoroéthylène (PTFE).

L'ouverture de chaque buse peut présenter un premier diamètre adapté pour que le fluide de refroidissement forme des gouttes lorsqu'il traverse les buses en mode de fonctionnement normal de la batterie, le premier diamètre étant notamment de l'ordre du millimètre, par exemple compris entre 1 mm et 5 mm.

Chaque trou peut présenter un second diamètre adapté pour que le fluide de refroidissement remplisse le logement lorsqu'il traverse le trou lors d'un emballement thermique, de l'ordre du centimètre, par exemple compris entre 1 cm et 3 cm.

L'invention porte aussi sur un système de refroidissement pour une batterie, comprenant :
- un boîtier défini précédemment ; et
- un circuit de refroidissement comprenant une pompe.

L'invention porte encore sur un pack batterie comprenant un système de refroidissement défini précédemment et des cellules de batteries logées dans le boîtier du système de refroidissement.

Le pack batterie peut comprendre un espace intercalaire entre les cellules pour la circulation du fluide de refroidissement pulvérisé en gouttes via les buses thermofusibles.

Le pack batterie peut comprendre une portion du logement agencée autour des cellules, le système de refroidissement étant dimensionné de sorte que cette portion se remplit progressivement de fluide de refroidissement si une cellule chauffe au-delà d'un seuil et qu'au moins une buse thermofusible fond, permettant d'immerger ou noyer ladite cellule.

L'invention porte enfin sur un véhicule comprenant un pack batterie défini précédem ment.

Les dessins annexés représentent, à titre d'exemple, un mode de réalisation d'un boîtier pour système de refroidissement pour une batterie selon l'invention.
[Fig.1] La figure 1 est une vue en coupe représentant de façon schématique un pack batterie équipé d'un boîtier pour système de refroidissement.
[Fig.2] La figure 2 est une vue en perspective représentant de façon schématique le montage d'éléments fusibles dans un boîtier du type de celui de la figure 1.
[Fig.3] La figure 3 est une vue en perspective représentant de façon schématique le montage d'éléments fusibles dans un boîtier du type de celui de la figure 1.
[Fig.4A] La figure 4a est une vue en coupe représentant de façon schématique un pack batterie équipé d'un boîtier pour système de refroidissement, en cas de fonctionnement normal de la batterie.
[Fig.4B] La figure 4b est une vue en coupe représentant de façon schématique un pack batterie équipé d'un boîtier pour système de refroidissement, en cas d'emballement thermique sur une cellule de la batterie.
[Fig.5A] La figure 5a est une vue en coupe représentant de façon schématique un pack batterie équipé d'un boîtier pour système de refroidissement, en cas de fonctionnement normal de la batterie.
[Fig.5B] La figure 5b est une vue en coupe représentant de façon schématique un pack batterie équipé d'un boîtier pour système de refroidissement, en cas d'emballement thermique sur une cellule de la batterie.

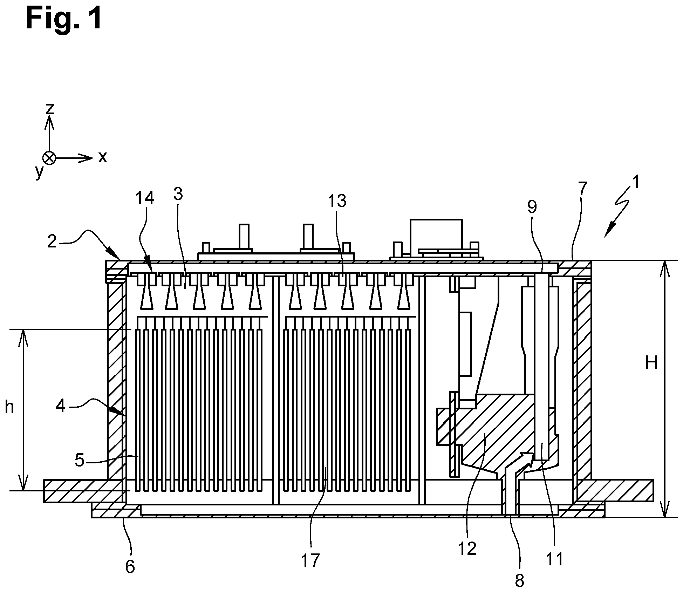

Un exemple d'un pack batterie 1 équipé d'un mode de réalisation d'un boîtier pour système de refroidissement est décrit ci-après en référence à la figure 1. Un tel pack batterie 1 est par exemple destiné à équiper un véhicule automobile afin d'alimenter en énergie électrique le moteur électrique de ce véhicule.

Par « pack batterie », on entend un ensemble comprenant un boîtier et au moins une batterie disposée à l'intérieur du boîtier. Le boîtier est destiné à entourer et/ou à servir d'enveloppe, notamment de protection, pour une batterie. Une telle batterie est par exemple une batterie d'alimentation de puissance d'un véhicule à motorisation électrique ou hybride. Une telle batterie est par exemple de type Lithium-ion (Li-ion).

Par « batterie », on entend une batterie ou un ensemble de modules batterie. Chaque module batterie comprend des cellules électrochimiques.

Par surface ou paroi « interne » ou « intérieure », on entend une surface ou paroi située, ou faisant face, à l'intérieur du boîtier. Par surface ou paroi « externe » ou « extérieure », on entend une surface ou paroi située à l'extérieur du boîtier.

Les termes « supérieur » et « inférieur » sont définis par rapport à un axe sensiblement vertical z, orienté de bas en haut.

Par « utilisation normale » ou « usage normal » ou « fonctionnement nominal » du pack batterie, on entend une utilisation ou un usage du pack batterie en l'absence de feu ou d'incendie ou d'emballement thermique, notamment en mode de fonctionnement normal d'une batterie.

On parle d'emballement thermique lorsque la température d'une cellule dépasse une température limite ou seuil.

L'invention propose un boîtier pour système de refroidissement pour une batterie permettant d'assurer, en plus d'une première fonction de refroidissement de la batterie par aspersion en fonctionnement nominal de la batterie, une seconde fonction de remplissage ou noyage de la batterie en cas d'emballement thermique.

Le pack batterie 1 comprend un boîtier 2 délimitant un logement 3 pour des modules batterie 4. Les modules batterie 4 comprennent chacun des cellules électrochimiques 5.

Avantageusement, le boîtier 2 présente une hauteur H strictement supérieure à la hauteur h de chaque cellule 5, de sorte que chaque cellule 5 puisse être entièrement immergée dans le fluide de refroidissement. Par hauteur, on entend la dimension selon la direction verticale z.

Pour éviter que la température interne d'une batterie ne devienne trop élevée, notamment lors d'une phase de recharge de la batterie, le pack batterie 1 comprend un système de refroidissement. Le système de refroidissement est destiné à assurer le maintien des modules batterie 4 à une température inférieure à un seuil. Le système de refroidissement comprend un circuit de refroidissement dans lequel circule un fluide de refroidissement.

Le boîtier 2 comprend une enveloppe, ou carter, ou des parois délimitant un logement 3 pour les modules batterie 4.

Le boîtier 2 comprend un carter inférieur 6 et un carter supérieur 7.

De préférence, le carter inférieur 6 comprend une paroi interne et une paroi externe parallèles entre elles, de façon à former une paroi double fond.

De préférence, le carter supérieur 7 comprend une paroi interne et une paroi externe parallèles entre elles, de façon à former une paroi double fond.

Le carter inférieur 6 et le carter supérieur 7 sont par exemple en un matériau métallique.

Le carter inférieur 6 comprend une ouverture d'entrée 8 pour un fluide de refroidissement. Le carter supérieur 7 comprend une ouverture de sortie 9 pour le fluide de refroidissement. Un conduit de circulation 11 pour le fluide de refroidissement communique avec l'ouverture d'entrée 8 et l'ouverture de sortie 9.

Le circuit de refroidissement est prévu pour mettre en mouvement et refroidir le fluide de refroidissement. Le circuit de refroidissement comprend une pompe 12. La pompe 12 permet de mettre en circulation le fluide de refroidissement dans le système de refroidissement.

Le carter inférieur 6 sert de réceptacle pour recevoir le fluide de refroidissement. La position de l'ouverture d'entrée 8 permet au fluide de refroidissement présent sur ce carter inférieur 6 de refluer vers l'ouverture d'entrée 8.

De préférence, le carter inférieur 6 comprend une paroi double fond. Ceci permet d'éviter que le fluide de refroidissement ne remonte dans le logement 3 lorsque le véhicule roule.

Le carter supérieur 7 du boîtier 2 est perforé. Le carter supérieur 7 comprend une pluralité de trous 13 qui débouchent dans le logement 3.

Habituellement, dans le cadre du refroidissement d'une batterie par aspersion d'un fluide diélectrique de refroidissement, de tels trous présentent des dimensions de l'ordre du millimètre.

L'invention propose un agrandissement de ces trous 13 dans le carter supérieur 7 et l'insertion d'éléments thermofusibles 14 percés en leur centre à l'emplacement des trous. Ceci permet d'ajouter à la fonction de refroidissement par aspersion du système de refroidissement en fonctionnement nominal de la batterie un aspect sécuritaire de noyage de la batterie en cas d'emballement thermique d'une cellule.

Les trous 13 peuvent être de forme circulaire. D'autres formes pourront être prévues pour les trous 13.

Les trous 13 présentent par exemple un diamètre de l'ordre de plusieurs centimètres, par exemple compris entre 1 cm et 3 cm.

Avantageusement, les trous 13 sont répartis selon la longueur et la largeur du carter supérieur 7, de façon à pouvoir arroser uniformément les modules batterie 4 placés au-dessous du carter supérieur 7. Par longueur, on entend la dimension du boîtier 2 selon la direction longitudinale x, et par largeur, on entend la dimension du boîtier 2 selon la direction transversale y.

Un élément thermofusible 14 est disposé à l'emplacement de chaque trou 13.

Chaque élément thermofusible 14 est apte à fondre lorsque la température devient supérieure à un seuil.

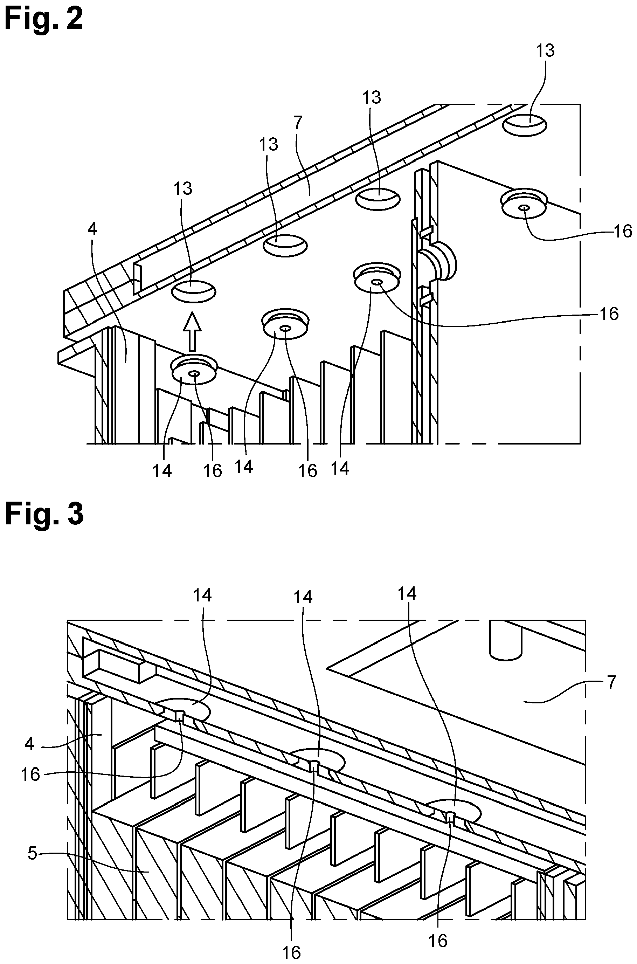

Le montage d'un élément thermofusible 14 à l'emplacement de chaque trou 13 du carter supérieur 7 est illustré plus en détails sur les figures 2 et 3.

Les éléments thermofusibles 14 présentent par exemple la forme d'une buse ou d'une rondelle comprenant un embout fusible.

Chaque élément ou buse thermofusible 14 comprend une ouverture 16, de préférence située au centre de la buse 14. Une telle ouverture 16 est destinée à assurer le passage d'un fluide de refroidissement. Le fluide de refroidissement peut circuler de façon étanche dans l'embout de chaque buse 14.

Les éléments ou rondelles ou buses thermofusibles 14 comprennent par exemple un polymère, par exemple un élastomère thermofusible (TPE).

Les éléments ou rondelles ou buses thermofusibles 14 sont par exemple en polytétrafluoroéthylène (PTFE).

La pluralité de buses thermofusibles 14 permet la circulation d'un fluide de refroidissement depuis le conduit 11 vers le logement 3. Les modules batterie 4 peuvent ainsi être aspergés ou arrosés par le haut via les buses thermofusibles 14 présentes dans le carter supérieur 7. Ceci permet le refroidissement des modules batterie 4 par aspersion d'un fluide diélectrique de refroidissement en cas de fonctionnement normal de la batterie.

Le diamètre D1 de l'ouverture 16 de chaque buse thermofusible 14 est choisi en fonction des propriétés physiques du fluide de refroidissement afin de permettre le passage du fluide de refroidissement et la formation de gouttes en cas de fonctionnement normal de la batterie.

Les éléments thermofusibles 14 présentent une forme et des dimensions adaptées pour former des gouttes de fluide de refroidissement en cas de fonctionnement normal de la batterie.

L'ouverture 16 de chaque buse thermofusible 14 présente par exemple un diamètre D1 de l'ordre du millimètre, par exemple compris entre 1 mm et 5 mm.

Les cellules 5 des modules batterie 4 sont positionnées dans le boîtier 2 de sorte à être écartées entre elles par des espaces intercalaires 17. Les espaces intercalaires 17 permettent le passage du fluide de refroidissement entre les cellules 5.

Avantageusement, les trous 13 munis des buses 14 sont alignés selon l'axe vertical z dans l'axe des espaces intercalaires 17, de sorte que les gouttes tombent sur les faces principales des cellules 5. Les trous 13 munis de buses 14 sont répartis sur des lignes parallèles qui s'étendent au-dessus des espaces intercalaires 17.

Le fluide de refroidissement est un fluide diélectrique, afin de ne pas créer de contact électrique entre les faces principales des différentes cellules 5.

Le débit dans le conduit 11 est par exemple compris entre 1 et 2 litres par minute, par exemple de l'ordre de 100 litres par heure. On choisira un débit adapté à la formation de gouttes lorsque le fluide de refroidissement traverse les buses 14.

Le fluide de refroidissement est par exemple un fluide diélectrique à faible viscosité.

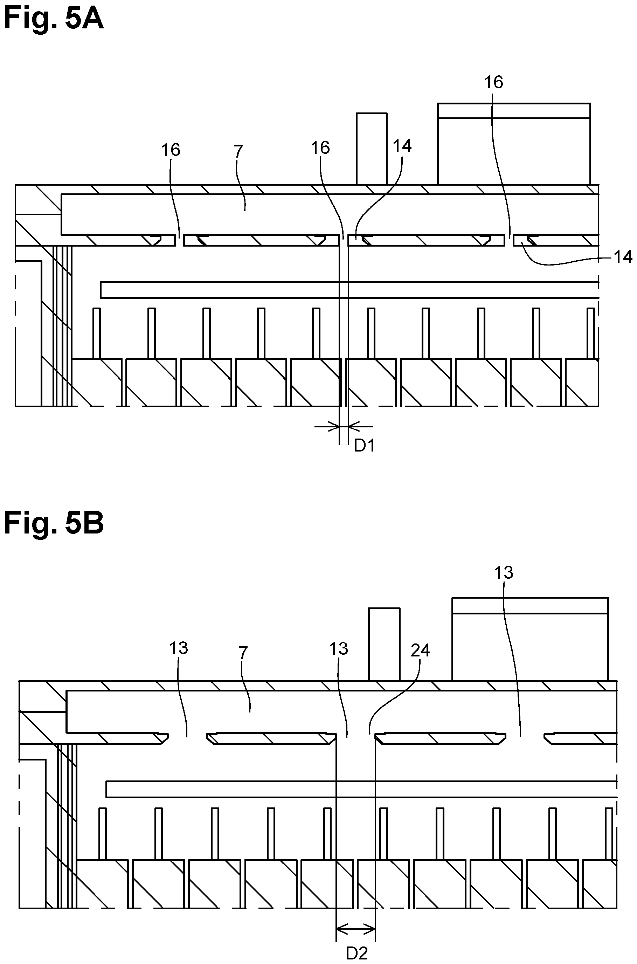

En cas d'emballement thermique sur une cellule, les buses thermofusibles 14 du module batterie comprenant cette cellule fondent. Le fluide de refroidissement circule alors à travers des ouvertures de diamètre qui s'agrandit fortement, grâce à la perte de matière libérant un passage de dimensions plus élevées pour le fluide de refroidissement. Comme cela est illustré sur les figures 5a et 5b, l'ouverture pour le fluide de refroidissement passe d'un diamètre D1 de l'ordre du millimètre, correspondant à l'ouverture 16 d'une buse 14, à un diamètre D2 de l'ordre du centimètre, correspondant à un trou 13. Ceci permet de « noyer » la cellule incriminée sous un fort volume de fluide de refroidissement, et de diminuer la température des cellules. Ceci permet d'éviter le risque de propagation du départ thermique aux autres cellules.

Un avantage d'un boîtier du type de celui décrit ci-dessus réside dans le fait qu'il permet d'obtenir un refroidissement par aspersion plus efficace en fonctionnement nominal de la batterie grâce aux buses d'aspersion à embouts fusibles, tout en permettant de noyer la batterie en cas d'emballement thermique par augmentation du débit du fluide de refroidissement.

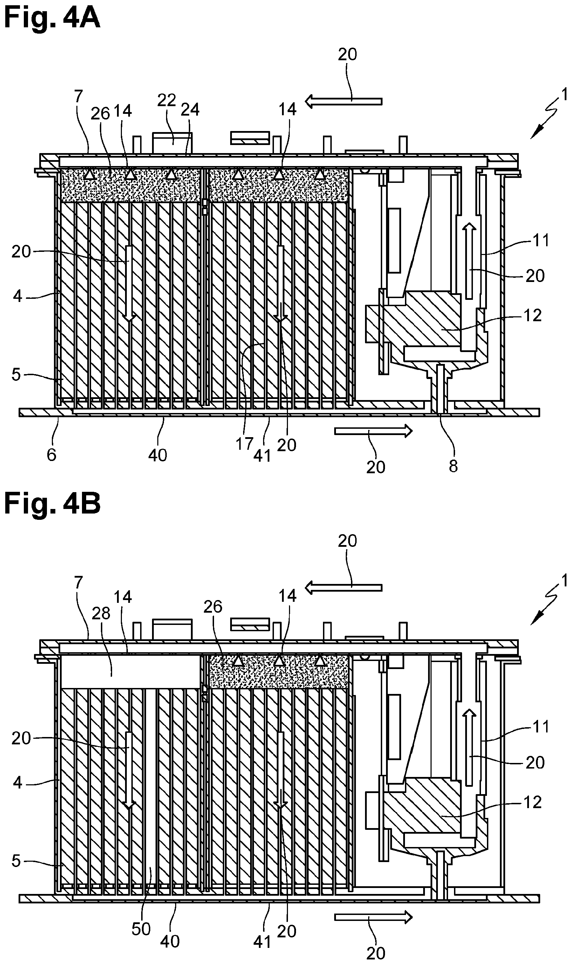

Le fonctionnement d'un boîtier pour système de refroidissement pour une batterie est décrit ci-après en référence aux figures 4a-4b et 5a-5b.

La circulation du fluide de refroidissement est représentée par des flèches 20.

Deux modules batterie 40 et 41 comprenant chacun plusieurs cellules électrochimiques 5 sont représentés sur les figures 4a et 4b. Les terminals/bus bar sont désignés par la référence 22 et le passage des bus bars par la référence 24.

En cas de fonctionnement nominal de la batterie (figures 4a et 5a), la pluralité de buses thermofusibles 14 permet la circulation du fluide de refroidissement depuis le conduit 11 vers les cellules 5. Les modules batterie 4 peuvent ainsi être aspergés ou arrosés par le haut via les buses thermofusibles 14 présentes dans le carter supérieur 7. En cas de fonctionnement normal de la batterie, les cellules 5 sont refroidies par aspersion du fluide de refroidissement. Le fluide pulvérisé 26 se propage le long des faces principales des cellules 5 grâce aux espaces intercalaires 17.

En cas d'emballement thermique sur une cellule (figures 4b et 5b), par exemple la cellule 50 du module 40, les buses thermofusibles 14 du module 40 fondent, ce qui permet d'agrandir les ouvertures permettant le passage du fluide de refroidissement. La portion 28 du logement 3 se remplit progressivement de fluide de refroidissement jusqu'à ce que le module 40 comprenant la cellule 50 soit entièrement immergé ou noyé. Ceci permet de « noyer » la cellule incriminée sous un fort volume de fluide, et de diminuer la température des cellules. Ceci permet d'éviter le risque de propagation du départ thermique aux autres cellules.

Il a été décrit ci-dessus un boîtier pour système de refroidissement pour une batterie d'alimentation de puissance d'un véhicule à motorisation électrique ou hybride. L'invention s'applique à tout système de stockage d'énergie mobile ou stationnaire.

## Revendications

1. Boîtier (2) pour système de refroidissement pour une batterie, délimitant un logement (3) pour des modules batterie (4), le boîtier comprenant :
- un carter inférieur (6) comprenant une ouverture d'entrée (8) pour un fluide de refroidissement ;
- un carter supérieur (7) comprenant une ouverture de sortie (9) pour le fluide de refroidissement ;
- un conduit (11) de circulation pour le fluide de refroidissement qui communique avec l'ouverture d'entrée (8) et l'ouverture de sortie (9), le carter supérieur (7) comprenant une pluralité de trous (13) qui débouchent dans ledit logement,
**caractérisé en ce qu'**au moins une buse thermofusible (14) est disposée à l'emplacement de chaque trou (13), chaque buse (14) comprenant une ouverture (16) permettant le passage du fluide de refroidissement, et chaque buse thermofusible (14) étant apte à fondre lorsque la température devient supérieure à un seuil.

2. Boîtier selon la revendication 1, dans lequel les buses thermofusibles (14) comprennent un polymère, notamment en élastomère thermofusible, par exemple en polytétrafluoroéthylène (PTFE).

3. Boîtier selon la revendication 1 ou 2, dans lequel l'ouverture (16) de chaque buse (14) présente un premier diamètre (D1) adapté pour que le fluide de refroidissement forme des gouttes lorsqu'il traverse les buses en mode de fonctionnement normal de la batterie, le premier diamètre (D1) étant notamment de l'ordre du millimètre, par exemple compris entre 1 mm et 5 mm.

4. Boîtier selon l'une quelconque des revendications 1 à 3, dans lequel chaque trou (13) présente un second diamètre (D2) adapté pour que le fluide de refroidissement remplisse le logement lorsqu'il traverse le trou lors d'un emballement thermique, de l'ordre du centimètre, par exemple compris entre 1 cm et 3 cm.

5. Système de refroidissement pour une batterie, comprenant :
- un boîtier (2) selon l'une quelconque des revendications précédentes ; et
- un circuit de refroidissement comprenant une pompe (12).

6. Pack batterie (1) comprenant un système de refroidissement selon la revendication 5 et des cellules (5) de batteries logées dans le boîtier (2) du système de refroidissement.

7. Pack batterie (1) selon la revendication précédente, comprenant un espace intercalaire (17) entre les cellules (5) pour la circulation du fluide de refroidissement pulvérisé en gouttes via les buses thermofusibles (14).

8. Pack batterie (1) selon la revendication 6 ou 7, comprenant une portion (28) du logement (3) agencée autour des cellules (5), le système de refroidissement étant dimensionné de sorte que cette portion (28) se remplit progressivement de fluide de refroidissement si une cellule (50) chauffe au-delà d'un seuil et qu'au moins une buse thermofusible (14) fond, permettant d'immerger ou noyer ladite cellule (50).

9. Véhicule comprenant un pack batterie (1) selon l'une des revendications 6 à 8.

## Patentansprüche

1. Gehäuse (2) für ein Kühlsystem für eine Batterie, das eine Aufnahme (3) für Batteriemodule (4) begrenzt, wobei das Gehäuse umfasst:
- eine untere Abdeckung (6), die eine Einlassöffnung (8) für ein Kühlmedium umfasst;
- eine obere Abdeckung (7), die eine Auslassöffnung (9) für das Kühlmedium umfasst;
- eine Zirkulationsleitung (11) für das Kühlmedium, die mit der Einlassöffnung (8) und der Auslassöffnung (9) in Verbindung steht, wobei die obere Abdeckung (7) eine Mehrzahl von Löchern (13) umfasst, die in die Aufnahme münden,
**dadurch gekennzeichnet, dass** mindestens eine wärmeschmelzbare Düse (14) an der Position jedes Lochs (13) angeordnet ist, wobei jede Düse (14) eine Öffnung (16) umfasst, die den Durchgang des Kühlmediums ermöglicht, und wobei jede wärmeschmelzbare Düse (14) geeignet ist zu schmelzen, wenn die Temperatur einen Schwellenwert überschreitet.

2. Gehäuse nach Anspruch 1, bei dem die wärmeschmelzbaren Düsen (14) ein Polymer umfassen, insbesondere aus wärmeschmelzbarem Elastomer, zum Beispiel aus Polytetrafluorethylen (PTFE).

3. Gehäuse nach Anspruch 1 oder 2, bei dem die Öffnung (16) jeder Düse (14) einen ersten Durchmesser (D1) aufweist, der so angepasst ist, dass das Kühlmedium Tropfen bildet, wenn es die Düsen im Normalbetriebsmodus der Batterie durchquert, wobei der erste Durchmesser (D1) insbesondere in der Größenordnung von Millimetern liegt, beispielsweise zwischen 1 mm und 5 mm.

4. Gehäuse nach einem der Ansprüche 1 bis 3, bei dem jedes Loch (13) einen geeigneten zweiten Durchmesser (D2) aufweist, der so angepasst ist, dass das Kühlmedium die Aufnahme füllt, wenn es das Loch bei einem thermischen Durchgehen durchdringt, in der Größenordnung von Zentimetern, beispielsweise zwischen 1 cm und 3 cm.

5. Kühlsystem für eine Batterie, umfassend:
- ein Gehäuse (2) nach einem der vorhergehenden Ansprüche; und
- einen Kühlkreislauf, der eine Pumpe (12) umfasst.

6. Batteriepack (1), umfassend ein Kühlsystem nach Anspruch 5 und Batteriezellen (5), die in dem Gehäuse (2) des Kühlsystems aufgenommen sind.

7. Batteriepack (1) nach dem vorhergehenden Anspruch, umfassend einen Zwischenraum (17) zwischen den Zellen (5) für die Zirkulation des Kühlmediums, das durch die wärmeschmelzbaren Düsen (14) zu Tropfen versprüht wird.

8. Batteriepack (1) nach Anspruch 6 oder 7, umfassend einen Abschnitt (28) der Aufnahme (3), der um Zellen (5) herum ausgebildet ist, wobei das Kühlsystem so dimensioniert ist, dass dieser Abschnitt (28) sich zunehmend mit Kühlmedium füllt, wenn sich eine Zelle (50) über einen Schwellenwert hinaus erwärmt und mindestens eine wärmeschmelzbare Düse (14) schmilzt, was es ermöglicht, die Zelle (50) unterzutauchen oder zu fluten.

9. Fahrzeug mit einem Batteriepack (1) nach einem der Ansprüche 6 bis 8.

## Claims

1. Housing (2) for a cooling system for a battery, delimiting a receiving portion (3) for battery modules (4), the housing comprising:
- a lower casing (6) comprising an inlet opening (8) for a cooling fluid;
- an upper casing (7) comprising an outlet opening (9) for the cooling fluid;
- a circulation duct (11) for the cooling fluid which communicates with the inlet opening (8) and the outlet opening (9), the upper casing (7) comprising a plurality of holes (13) which lead into said receiving portion,
**characterized in that** at least one hot-melt nozzle (14) is disposed at each hole (13), each nozzle (14) comprising an opening (16) through which cooling fluid can pass, and each hot-melt nozzle (14) being capable of melting when the temperature exceeds a threshold.

2. Housing according to Claim 1, wherein the hot-melt nozzles (14) comprise a polymer, notably made of hot-melt elastomer, for example polytetrafluoroethylene (PTFE).

3. Housing according to Claim 1 or 2, wherein the opening (16) in each nozzle (14) has a first diameter (D1) designed such that the cooling fluid forms droplets as it passes through the nozzles in the normal operating mode of the battery, the first diameter (D1) notably being measured in millimetres, for example between 1 mm and 5 mm.

4. Housing according to any one of Claims 1 to 3, wherein each hole (13) has a second diameter (D2) designed such that the cooling fluid fills the receiving portion when it passes through the hole during a thermal runaway event, measured in centimetres, for example between 1 cm and 3 cm.

5. Cooling system for a battery, comprising:
- a housing (2) according to any one of the preceding claims; and
- a cooling circuit comprising a pump (12).

6. Battery pack (1) comprising a cooling system according to Claim 5 and battery cells (5) accommodated in the housing (2) of the cooling system.

7. Battery pack (1) according to the preceding claim, comprising an interspace (17) between the cells (5) for the circulation of the cooling fluid sprayed in droplets via the hot-melt nozzles (14).

8. Battery pack (1) according to Claim 6 or 7, comprising a portion (28) of the receiving portion (3) that is arranged around the cells (5), the cooling system being dimensioned such that this portion (28) fills gradually with cooling fluid if a cell (50) heats up above a threshold and such that at least one hot-melt nozzle (14) melts, making it possible to immerse or submerge said cell (50).

9. Vehicle comprising a battery pack (1) according to one of Claims 6 to 8.
